# EUROPEAN PATENT APPLICATION

(11) **EP 4 782 293 A1**
(43) Date of publication of application: **29.07.2026**
(21) Application number: 25226970.9
(22) Date of filing: 23.12.2025
(51) Int. Cl.: B60W 30/09, B60W 30/095, B60W 50/10, B60W 50/12

(54) **VEHICLE CONTROL APPARATUS, VEHICLE CONTROL METHOD, AND PROGRAM**

(30) Priority: 28.01.2025 JP 2025011879
(71) Applicant: TOYOTA JIDOSHA KABUSHIKI KAISHA, Toyota-Shi, Aichi-Ken 471-8571 (JP)
(72) Inventor: MIYAMOTO, Yuhei, Toyota-shi, 471-8571 (JP)
(74) Representative: J A Kemp LLP

(57) **Abstract**

A vehicle control apparatus (10) performs pre-collision control for reducing a collision probability that a vehicle (VA) collides with an object when the collision probability is high. The vehicle control apparatus prohibits performing the pre-collision control when an operation amount related to a steering operation of a steering wheel of the vehicle by a driver becomes greater than a first threshold value during the pre-collision control. The vehicle control apparatus continues to prohibit performing the pre-collision control when the steering operation satisfies a predetermined continuation condition, in a case where the operation amount is equal to or less than a second threshold value after prohibiting performing the pre-collision control.

## Description

### TECHNICAL FIELD

The present invention relates to a vehicle control apparatus for performing pre-collision control for reducing a collision probability that a vehicle collides with an object, when the collision probability is high. The present invention relates to a vehicle control method for causing a computer mounted on the vehicle to perform the pre-collision control. The present invention relates to a program for causing the computer to perform the pre-collision control.

### BACKGROUND

Conventionally, a vehicle control apparatus for performing the pre-collision control has been known. For example, a vehicle control apparatus described in Patent Document 1 (hereinafter referred to as "the conventional apparatus") performs, as the pre-collision control, automatic deceleration control to decelerate the vehicle without requiring a braking operation by the driver. The conventional apparatus terminates the automatic deceleration control when an override condition is satisfied while the automatic deceleration control is being performed. The override condition is satisfied when an absolute value of a steering angular velocity of a steering wheel is greater than a threshold value.
Patent Document 1: Japanese Patent Application Laid-Open No. 2021-079904

### SUMMARY

Even if the driver does not desire resuming the automatic deceleration control, the conventional apparatus may resume the automatic deceleration control once the override condition is no longer satisfied (that is, when the absolute value of the steering angular velocity becomes equal to or less than the threshold value). The driver is likely to feel annoyed by such resumed automatic deceleration control.

The present invention is made to address the above problem. That is, one of the objects of the present invention is to provide a vehicle control apparatus capable of reducing a probability that the driver feels annoyed by the pre-collision control that is resumed against the driver's intention.

A vehicle control apparatus according to the present invention (hereinafter referred to as "the present apparatus") performs pre-collision control for reducing a collision probability that a vehicle collides with an object (step 325) when the collision probability is high (step 320: "Yes").

The present apparatus is configured to:
prohibit performing the pre-collision control (step 435, step 330: "No") when an operation amount related to a steering operation of a steering wheel of the vehicle by a driver becomes greater than a first threshold value during the pre-collision control (step 425: "Yes"); and
continue to prohibit performing the pre-collision control (step 330: "No") when the steering operation satisfies a predetermined continuation condition (step 455: "Yes", step 460: "Yes"), in a case where the operation amount is equal to or less than a second threshold value after prohibiting performing the pre-collision control (step 440: "Yes").

When the pre-collision control is performed, the driver may perform the steering operation to avoid the collision with the object (hereinafter referred to as an "avoidance steering operation"). If the pre-collision control is performed while the driver is performing the avoidance steering operation, the driver may feel annoyed by the pre-collision control. Therefore, when the operation amount related to the steering operation is greater than the first threshold value, the present apparatus determines that the avoidance steering operation is being performed and prohibits performing the pre-collision control.

Even when the operation amount becomes equal to or less than the second threshold value, if the steering operation satisfies the predetermined continuation condition, the present apparatus determines that the avoidance steering operation is being performed and continues to prohibit performing the pre-collision control. This makes it possible to reduce the probability that the pre-collision control is resumed against the driver's intention, even though the driver is performing the avoidance steering operation. Accordingly, the probability that the driver feels annoyed by the pre-collision control can be reduced.

In one aspect of the present apparatus, the present apparatus is configured to acquire, as the operation amount, a steering angular velocity that represents a change amount per unit time of a steering angle of the steering wheel (step 410, step 425, step 440).

The steering angular velocity represents an instantaneous steering state of the steering wheel by the driver. Since the present apparatus adopts the steering angular velocity as the operation amount, the present apparatus can promptly detect the avoidance steering operation performed by the driver. Accordingly, the present apparatus can prohibit performing the pre-collision control immediately after the driver starts the avoidance steering operation.

In one aspect of the present apparatus, the present apparatus is configured to:
periodically acquire a steering angle of the steering wheel (step 405); and
determine that the steering operation satisfies the continuation condition when at least one of a first condition and a second condition is satisfied,
the first condition being satisfied when an absolute value of the steering angle is greater than a threshold angle (step 455: "Yes"), and
the second condition being satisfied when an absolute value of a current steering angle acquired in a current cycle is equal to or greater than an absolute value of a previous steering angle acquired in a previous cycle (step 460: "Yes").

When the continuation condition is satisfied, the present apparatus regards that the driver is still performing the avoidance steering operation. Therefore, in the determination of whether or not the continuation condition is satisfied, the present apparatus does not need to grasp the instantaneous steering state. If it is determined whether or not the continuation condition is satisfied based on a value such as the steering angular velocity, there is a probability that it is erroneously determined that the continuation condition is not satisfied, even though the driver is still performing the avoidance steering operation. In view of this, the present apparatus determines whether or not the continuation condition is satisfied based on the steering angle, which has a smaller instantaneous change amount than the steering angular velocity, thereby making it possible to reduce a probability of erroneous determination.

In the above aspect, the present apparatus is configured to determine whether or not at least one of the first condition and the second condition is satisfied, when a direction of the steering operation is the same as a steering direction of the steering wheel (step 450: "Yes") at a time when the operation amount becomes greater than the first threshold value.

If the direction of the steering operation is different from the direction of the steering operation at the time when the operation amount becomes greater than the first threshold value, it is highly likely that the steering operation is not the avoidance steering operation. Therefore, the present apparatus determines whether or not at least one of the first condition and a second condition is satisfied, only when the direction of the steering operation is the same as the direction of the steering operation at the time when the operation amount becomes greater than the first threshold value. This makes it possible to reduce the probability that the continuation condition is determined to be satisfied even when the driver is not performing the avoidance steering operation.

In the above aspect, the present apparatus is configured to permit performing the pre-collision control (step 475) when a state in which the steering operation does not satisfy the continuation condition continues for a predetermined time or more (step 470: "Yes") in a case where the operation amount becomes equal to or less than the second threshold value (step 440: "Yes") after prohibiting performing the pre-collision control.

When the state in which the steering operation does not satisfy the continuation condition continues for the predetermined time or more, it is highly likely that the driver is not performing the avoidance steering operation. In this case, the present apparatus permits performing the pre-collision control.

In one aspect of the present apparatus, the second threshold value is set to be equal to or less than the first threshold value.

In one aspect of the present apparatus, the present apparatus is configured to:
determine that the steering operation satisfies the continuation condition when a continuation determination value, which varies depending on the steering operation and is different from the operation amount, satisfies a predetermined condition (step 455: "Yes", step 460: "Yes"); and
adopt a time differential value of first order or higher of the continuation determination value as the operation amount.

The time differential value of first order or higher of the continuation determination value is adopted as the operation amount. Therefore, the operation amount represents the instantaneous steering state of the driver more directly than the continuation determination value. Accordingly, the present apparatus can promptly detect that the driver has performed the avoidance steering operation. Furthermore, the present apparatus can reduce the probability erroneously determining that the continuation condition is not satisfied, even though the driver is still performing the evasive steering operation.

A vehicle control method according to the present invention causes a computer mounted on a vehicle to perform pre-collision control for reducing a collision probability that the vehicle collides with an object (step 325) when the collision probability is high (step 320: "Yes").

The vehicle control method comprises:
a step of prohibiting performing the pre-collision control (step 435, step 330: "No") when an operation amount related to a steering operation of a steering wheel of the vehicle by a driver becomes greater than a first threshold value during the pre-collision control (step 425: "Yes"); and
a step of continuing to prohibit performing the pre-collision control (step 330: "No") when the steering operation satisfies a predetermined continuation condition (step 455: "Yes", step 460: "Yes"), in a case where the operation amount is equal to or less than a second threshold value (step 440: "Yes") after prohibiting performing the pre-collision control.

A program for causing a computer mounted on a vehicle to perform pre-collision control for reducing a collision probability that the vehicle collides with an object (step 325) when the collision probability is high (step 320: "Yes"),
wherein the program causes the computer to:
prohibit performing the pre-collision control (step 435, step 330: "No") when an operation amount related to a steering operation of a steering wheel of the vehicle by a driver becomes greater than a first threshold value during the pre-collision control (step 425: "Yes"); and
continue to prohibit performing the pre-collision control (step 330: "No") when the steering operation satisfies a predetermined continuation condition (step 455: "Yes", step 460: "Yes"), in a case where the operation amount is equal to or less than a second threshold value (step 440: "Yes") after prohibiting performing the pre-collision control.

According to the above vehicle control method and the above program, it is possible to reduce the probability that the pre-collision control is resumed against the driver's intention, even though the driver is performing the avoidance steering operation. Accordingly, it is possible to reduce the probability that the driver feels annoyed by the pre-collision control.

### BRIEF DESCRIPTION OF THE DRAWINGS

FIG. 1 is a schematic system configuration diagram of a vehicle control apparatus according to an embodiment of the present invention.
FIG. 2 is a timing chart for explaining an operation of the vehicle control apparatus according to the embodiment of the present invention.
FIG. 3 is a flowchart illustrating a pre-collision control routine executed by a CPU of an ECU shown in FIG. 1.
FIG. 4 is a flowchart illustrating an override determination routine executed by the CPU of the ECU shown in FIG. 1.

### DETAILED DESCRIPTION

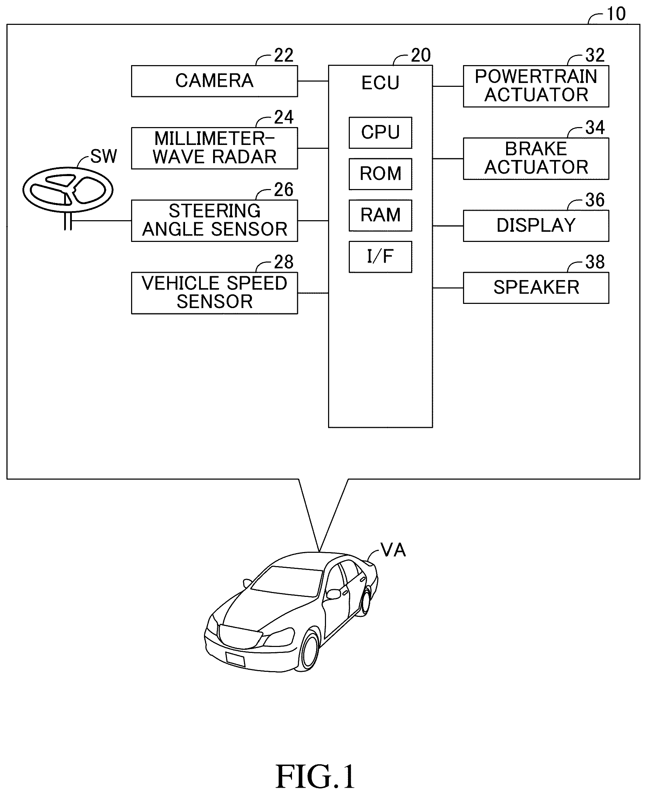

A vehicle control apparatus 10 according to an embodiment of the present invention (hereinafter, referred to as "the present apparatus 10") is applied to a vehicle VA and comprises an ECU 20 shown in FIG. 1. In the present specification, the "ECU 20" is an electronic control unit having a microcomputer as a main component. The ECU 20 is also referred to as a control unit, a controller and a computer. The microcomputer includes a CPU (processor), a ROM, a RAM and an interface (I/F), etc. Functions realized by the ECU 20 may be realized by multiple ECUs.

The ECU 20 is connected to a camera 22, a millimeter-wave radar 24, a steering angle sensor 26, and a vehicle speed sensor 28.

The camera 22 acquires image data by capturing a scene in front of the vehicle VA. The ECU 20 obtains the image data from the camera 22. The millimeter-wave radar 24 receives a reflected wave that is reflected by an object from a millimeter wave transmitted forward from the vehicle VA, and acquires radar data. The radar data is data relating to a position of the object with respect to the vehicle VA and a relative speed Vr of the object with respect to the vehicle VA. The front camera 22 and the millimeter-wave radar 24 are sensors (remote sensing sensors) that detect an object using remote sensing technology.

The ECU 20 obtains the image data from the camera 22 and the radar data from the millimeter-wave radar 24. The ECU 20 recognizes the object in front of the vehicle VA based on the image data and the radar data.

The steering angle sensor 26 measures a steering angle θ of a steering wheel SW. When the steering wheel SW is in a neutral position, the steering angle θ is "0 deg." When the steering wheel SW is steered to the right, the steering angle θ is a positive value. When the steering wheel SW is steered to the left, the steering angle θ is a negative value. The vehicle speed sensor 28 measures a vehicle speed Vs that represents a speed of the vehicle VA. The ECU 20 obtains the measured values from the steering angle sensor 26 and the vehicle speed sensor 28.

Further, the ECU 20 is connected to a powertrain actuator 32, a brake actuator 34, a display 36, and a speaker 38.

The powertrain actuator 32 changes a driving force generated by a drive device (e.g., an internal combustion engine and/or an electric motor) of the vehicle VA.

The brake actuator 34 changes a braking force applied to the vehicle VA.

The display 36 is disposed at a position visible to the driver. For example, the display 36 may be a meter display. The speaker 38 is disposed in a cabin of the vehicle VA.

### <Pre-Collision Control>

The ECU 20 of the present apparatus 10 recognizes the object in front of the vehicle VA based on the image data and the radar data. When a collision probability, which represents a probability that the vehicle VA collides with the object, is high, the ECU 20 performs a pre-collision control to reduce the collision probability.

As an example, the ECU 20 acquires a collision time (hereinafter referred to as "TTC") as an index value representing the collision probability, based on the image data and the radar data. TTC stands for Time To Collision. Specifically, the ECU 20 acquires the TTC by dividing a distance between the vehicle VA and the object by the relative speed Vr of the object. A smaller TTC represents a higher collision probability. When the TTC is equal to or less than a threshold time Tth (in other words, when the collision probability is equal to or greater than a threshold level), the ECU 20 performs, as the pre-collision control, a deceleration control for automatically decelerating the vehicle VA at a predetermined deceleration without requiring a braking operation by the driver. Since the deceleration control decelerates the vehicle VA, the collision probability can be reduced.

Note that the ECU 20 may also execute, as the pre-collision control, a warning control for notifying the driver that the collision probability is high. In the warning control, the ECU 20 causes a predetermined display element representing a high collision probability to be displayed on the display 36 and causes a predetermined warning sound to be output from the speaker 38. In the warning control, at least one of the display of the display element and the output of the warning sound may be performed.

Furthermore, the ECU 20 may start the warning control when the TTC becomes equal to or less than a first threshold time Tth1, and then start the deceleration control when the TTC further becomes equal to or less than a second threshold time Tth2 that is shorter than the first threshold time Tth1.

### (Overview of Operation)

When an override condition (also referred to as a "steering override condition") is satisfied while the ECU 20 is performing the pre-collision control, the ECU 20 prohibits performing the pre-collision control. The override condition is satisfied when an operation amount related to a steering operation on the steering wheel SW exceeds a threshold amount. For example, the ECU 20 uses (adopts) a steering angular velocity ω as the operation amount. The steering angular velocity ω represents a change amount of the steering angle θ per unit time. The ECU 20 acquires the steering angular velocity ω by differentiating the steering angle θ with respect to time. When an absolute value of the steering angular velocity ω becomes greater than a threshold angular velocity ωth, the ECU 20 determines that the override condition is satisfied. When the absolute value of the steering angular velocity ω becomes greater than the threshold angular velocity ωth while the pre-collision control is being performed, it is highly likely that the driver is performing the steering operation to avoid a collision with the object. Such steering operation may be referred to as an avoidance steering operation. The driver is likely to feel annoyed by the pre-collision control that is being performed during the avoidance steering operation. Therefore, when the override condition is satisfied, the ECU 20 prohibits performing the pre-collision control.

When the absolute value of the steering angular velocity ω becomes equal to or less than the threshold angular velocity ωth after the pre-collision control is prohibited, the ECU 20 determines whether or not a continuation condition is satisfied. The ECU 20 determines that the continuation condition is satisfied when at least one of the following conditions 1 and 2 is satisfied.

Condition 1: A steering direction of the steering wheel SW by the driver is in an avoidance direction, and an absolute value (|θ|) of the steering angle θ is greater than a threshold angle θth.

Condition 2: The steering direction is in the avoidance direction, and an absolute value of a current steering angle θtt representing the currently obtained steering angle θ is equal to or greater than an absolute value of a previous steering angle θpre representing a previously obtained steering angle θ.

The avoidance direction represents a steering direction that enables the vehicle VA to avoid the collision with the object with a high collision probability. As one example, the steering direction at the time at which the override condition is satisfied is used as the avoidance direction. More specifically, if the steering angular velocity ω is positive at the time at which the override condition is satisfied, the right direction is used as the avoidance direction, and is the steering angular velocity ω is negative, the left direction is used as the avoidance direction.

When the continuation condition is satisfied, it is highly likely that the driver is performing the avoidance steering operation to avoid the collision with the object. Specifically, when the above condition 1 is satisfied, it is highly likely that the driver is steering the steering wheel SW relatively largely to avoid the collision. When the above condition 2 is satisfied, it is highly likely that the driver is either steering the steering wheel SW to maintain the previous steering angle θ or increase the steering angle θ in order to avoid the collision.

When the continuation condition is satisfied, the ECU 20 continues to prohibit performing the pre-collision control. As a result, when it is highly likely that the driver is performing the avoidance steering operation, the ECU 20 continues to prohibit performing the pre-collision control. Accordingly, the apparatus 10 can reduce the probability that the pre-collision control is resumed against the driver's intention, and thus can reduce the possibility that the driver feels annoyed by the pre-collision control.

### (Operation Example)

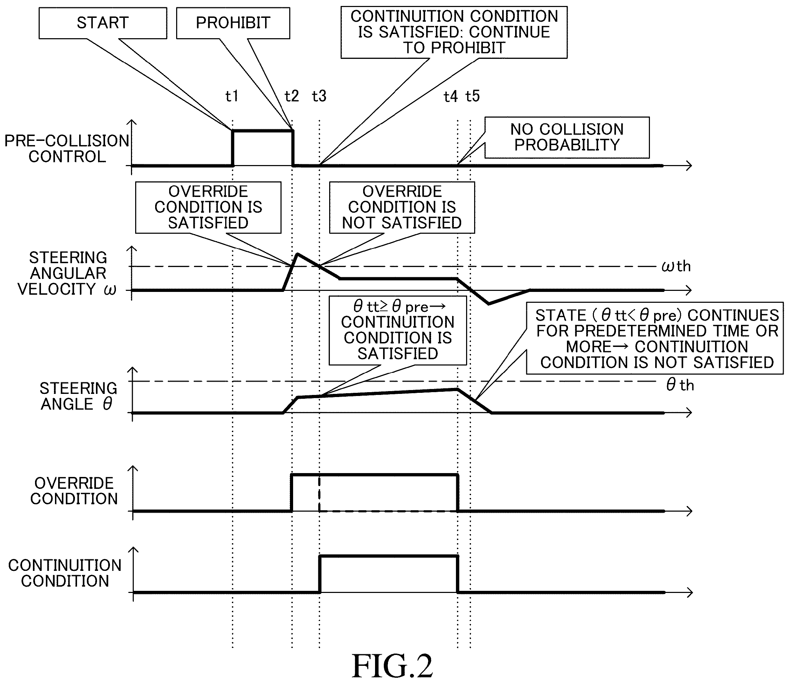

An operation example of the present apparatus 10 is described with reference to FIG. 2.

At time point t1, the TTC becomes equal to or less than the threshold time Tth. Therefore, at time point t1, the ECU 20 starts performing the pre-collision control.

At time point t2, since the absolute value of the steering angular velocity ω becomes greater than the threshold angular velocity ωth, the override condition is satisfied. In this case, the ECU 20 prohibits performing the pre-collision control.

At time point t3, since the absolute value of the steering angular velocity ω becomes equal to or less than the threshold angular velocity ωth, the override condition is no longer satisfied. Further, at time point t3, since the steering direction is the avoidance direction and the absolute value of the current steering angle θtt is equal to or greater than the absolute value of the previous steering angle θpre, the above-described condition 2 is satisfied. That is, at time point t3, the continuation condition is satisfied. Therefore, although the override condition is no longer satisfied at time point t3, since the continuation condition is satisfied, the ECU 20 continues to prohibit performing the pre-collision control by regarding that the override condition is still satisfied.

At time point t4, since there is no longer the collision probability that the vehicle VA collide with the object, a termination condition for the pre-collision control is satisfied. In this case, the ECU 20 determines that neither the override condition nor the continuation condition is satisfied.

If the termination condition for the pre-collision control is not satisfied at the time point t4, a state in which neither condition 1 nor condition 2 is satisfied (that is, the continuation condition is not satisfied) continues for a predetermined time at time point t5. In this case, the ECU 20 permits performing the pre-collision control at time point t5.

### <Pre-collision Control Routine>

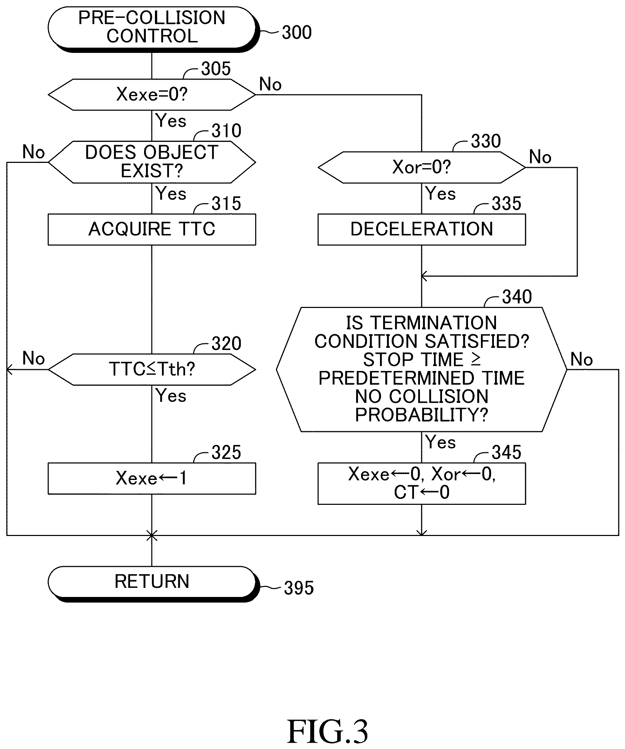

When an appropriate time comes, the CPU starts a process from step 300 in FIG. 3. At step 305, the CPU determines whether or not an execution flag Xexe is "0". The execution flag Xexe is set to "1" when the pre-collision control is executed, and is set to "0" when the pre-collision control is not executed. The execution flag Xexe is set to "0" in an initialization routine. The initialization routine is executed by the CPU when an ignition key switch (not shown) of the vehicle VA is changed from an OFF position to an ON position.

If the execution flag Xexe is "0", the CPU makes a "Yes" determination at step 305, and the process proceeds to step 310. At step 310, the CPU determines whether or not at least one of objects exists in front of the vehicle VA, based on the image data and the radar data.

If no object exists in front of the vehicle VA, the CPU makes a "No" determination at step 310, and the process proceeds to step 395. At step 395, the CPU temporarily terminates this routine.

On the other hand, if at least one of objects exists in front of the vehicle VA, the CPU makes a "Yes" determination at step 310, and executes step 315 and step 320.

Step 315: The CPU acquires the TTC (Time To Collision) for each object.

Step 320: The CPU determines whether or not the TTC is equal to or less than a threshold time Tth.

If the TTC is greater than the threshold time Tth, the CPU makes a "No" determination at step 320, and the process proceeds to step 395.

On the other hand, if the TTC is equal to or less than the threshold time Tth, the CPU makes a "Yes" determination at step 320, and the process proceeds to step 325. At step 325, the CPU sets the execution flag Xexe to "1". Thereafter, the process proceeds to step 395.

If the execution flag Xexe is "1", the CPU makes a "No" determination at step 305, and the process proceeds to step 330. At step 330, the CPU determines whether or not an override flag Xor is "0". The override flag Xor is set to "1" when the override condition is satisfied, and is set to "0" when the override condition is not satisfied. The override flag Xor is set to "0" in the initialization routine.

If the override flag Xor is "0", the CPU makes a "Yes" determination at step 330, and executes step 335 and step 340.

Step 335: The CPU controls the powertrain actuator 32 and the brake actuator 34 such that the vehicle VA decelerates at a predetermined deceleration Gpd.

Step 340: The CPU determines whether or not the termination condition is satisfied.

If at least one of the following conditions 3 and 4 is satisfied, the CPU determines that the termination condition is satisfied.

Condition 3: A stop time is equal to or greater than a predetermined time. The stop time represents a time period during which the vehicle speed Vs is "0 km/h".

Condition 4: There is no collision probability object. For example, the CPU determines that there is no collision probability when the TTC of the object is equal to or greater than a termination threshold time, when the object starts moving away from the vehicle VA, or when a relative movement direction of the object with respect to the vehicle VA does not intersect with the vehicle VA.

If neither condition 3 nor condition 4 is satisfied, the termination condition is not satisfied. In this case, the CPU makes a "No" determination at step 340, and the process proceeds to step 395.

If the override flag Xor is "1" when the process proceeds to step 330, the CPU makes a "No" determination at step 330, and the process proceeds to step 340 without executing step 335. As a result, when the override flag Xor is "1", since the CPU does not execute step 335, the CPU prohibits performing the pre-collision control.

If at least one of condition 3 and condition 4 is satisfied when the process proceeds to step 340, the termination condition is satisfied. In this case, the CPU makes a "Yes" determination at step 340, and the process proceeds to step 345. At step 345, the CPU sets the execution flag Xexe to "0", sets the override flag Xor to "0", and sets a timer CT, which will be described later, to "0". Thereafter, the process proceeds to step 395.

### <Override Determination Routine>

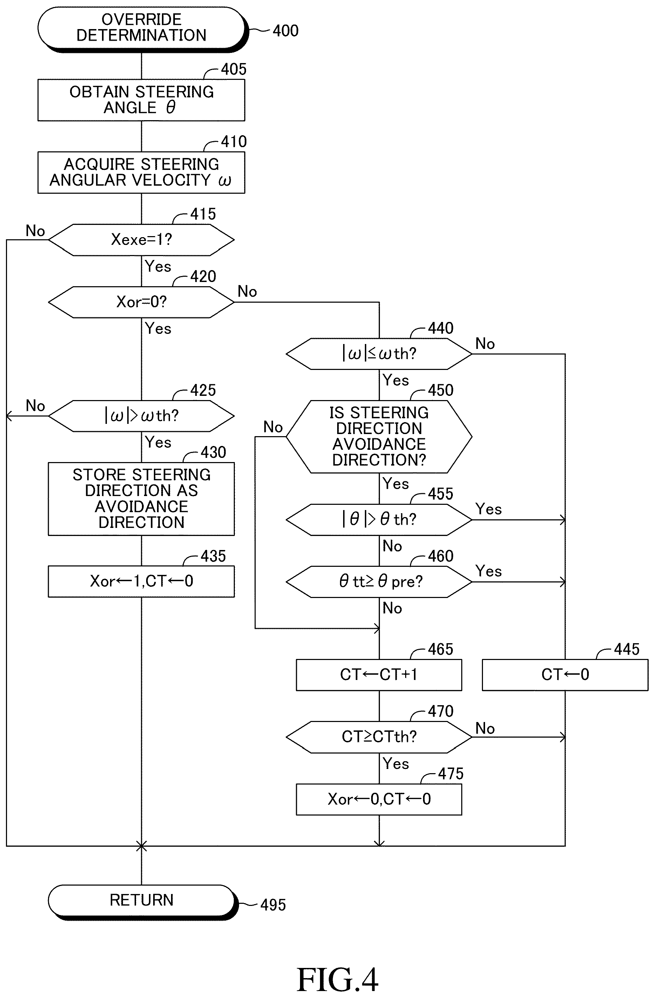

When an appropriate time comes, the CPU starts a process from step 400 in FIG. 4, and executes steps 405 to 415.

Step 405: The CPU obtains the steering angle θ.

Step 410: The CPU acquires the steering angular velocity ω based on the steering angle θ.

Step 415: The CPU determines whether or not the execution flag Xexe is "1".

If the execution flag Xexe is "0", the CPU makes a "No" determination at step 415, and the process proceeds to step 495. At step 495, the CPU temporarily terminates this routine.

If the execution flag Xexe is "1", the CPU makes a "Yes" determination at step 415, and the process proceeds to step 420. At step 420, the CPU determines whether or not the override flag Xor is "0".

If the override flag Xor is "0", the CPU makes a "Yes" determination at step 420, and the process proceeds to step 425. At step 425, the CPU determines whether or not the absolute value of the steering angular velocity ω (|ω|) is greater than the threshold angular velocity ωth.

If the absolute value of the steering angular velocity ω (|ω|) is equal to or less than the threshold angular velocity ωth, the override condition is not satisfied. In this case, the CPU makes a "No" determination at step 425, and the process proceeds to step 495.

On the other hand, if the absolute value of the steering angular velocity ω (|ω|) is greater than the threshold angular velocity ωth, the override condition is satisfied. In this case, the CPU makes a "Yes" determination at step 425, and executes steps 430 and 435.

Step 430: The CPU stores the current steering direction as the avoidance direction.

Step 435: The CPU sets the override flag Xor to "1", and sets a timer CT to "0".

The timer CT is a timer for counting a time (duration) in which neither condition 1 nor condition 2 is satisfied.

Thereafter, the process proceeds to step 495.

If the override flag Xor is "1" when the process proceeds to step 420, the CPU makes a "No" determination at step 420, and the process proceeds to step 440. At step 440, the CPU determines whether or not the absolute value of the steering angular velocity ω (|ω|) is equal to or less than the threshold angular velocity ωth.

If the absolute value of the steering angular velocity ω (|ω|) is greater than the threshold angular velocity ωth, the CPU makes a "No" determination at step 440, and the process proceeds to step 445. At step 445, the CPU sets the timer CT to "0". Thereafter, the process proceeds to step 495.

If the absolute value of the steering angular velocity ω (|ω|) is equal to or less than the threshold angular velocity ωth, the CPU makes a "Yes" determination at step 440, and the process proceeds to step 450. At step 450, the CPU determines whether or not the current steering direction is the same as the avoidance direction.

If the current steering direction is the same as the avoidance direction, the CPU makes a "Yes" determination at step 450, and the process proceeds to step 455. At step 455, the CPU determines whether or not the absolute value of the steering angle θ (|θ|) is greater than a threshold angle θth (that is, whether or not the above condition 1 is satisfied).

If the absolute value of the steering angle θ (|θ|) is greater than the threshold angle θth, the condition 1 is satisfied, and therefore the continuation condition is satisfied. In this case, the CPU makes a "Yes" determination at step 455, and executes step 445. Thereafter, the process proceeds to step 495. As a result, even when the absolute value of the steering angular velocity ω (|ω|) is equal to or less than the threshold angular velocity ωth, the override flag Xor is maintained as "1" if the continuation condition is satisfied (in other words, the override condition is regarded as being satisfied).

On the other hand, if the absolute value of the steering angle θ (|θ|) is equal to or less than the threshold angle θth, the CPU makes a "No" determination at step 455, and the process proceeds to step 460. At step 460, the CPU determines whether or not the absolute value of the current absolute steering angle θtt is equal to or greater than the absolute value of the previous absolute steering angle θpre.

If the absolute value of the current steering angle θtt is equal to or greater than the absolute value of the previous absolute steering angle θpre, the condition 2 is satisfied, and therefore the continuation condition is satisfied. In this case, the CPU makes a "Yes" determination at step 460, and executes step 445. Thereafter the process proceeds to step 495. As a result, even when the absolute value of the steering angular velocity ω (|ω|) is equal to or less than the threshold angular velocity ωth, the override flag Xor is maintained as "1" if the continuation condition is satisfied.

If the current steering direction is different from the avoidance direction when the process proceeds to step 450, neither condition 1 nor condition 2 is satisfied, and thus the continuation condition is not satisfied. In this case, the CPU makes a "No" determination at step 450, and the process proceeds to step 465. Similarly, if the absolute value of the current steering angle θtt is less than the absolute value of the previous steering angle θpre when the process proceeds to step 460, the continuation condition is not satisfied. In this case, the CPU makes a "No" determination at step 460, and the process proceeds to step 465.

At step 465, the CPU increments the timer CT by "1". Thereafter, the process proceeds to step 470. At step 470, the CPU determines whether or not the timer CT is equal to or greater than a threshold CTth. The threshold CTth is set such that, when the timer CT is equal to or greater than CTth, a state in which neither condition 1 nor condition 2 is satisfied continues for a predetermined time.

If the timer CT is less than the threshold CTth, the CPU makes a "No" determination at step 470, and the process proceeds to step 495.

On the other hand, if the timer CT is equal to or greater than the threshold CTth, the CPU makes a "Yes" determination at step 470, and the process proceeds to step 475. At step 475, the CPU sets the override flag Xor to "0", and sets the timer CT to "0". Thereafter, the process proceeds to step 495.

As described above, even when the override condition is no longer satisfied due to the absolute value of the steering angular velocity ω (|ω|) becoming equal to or less than the threshold angular velocity ωth (i.e., a "Yes" determination is made at step 440), the prohibition of performing the pre-collision control is continued if the continuation condition is satisfied (i.e., a "Yes" determination is made at step 450 and also at step 455, or at step 460). Accordingly, when there is a high probability that the driver is performing the avoidance steering operation, the prohibition of performing the pre-collision control is continued, so the probability that the pre-collision control is resumed against the driver's intention can be reduced.

Since the steering angular velocity ω is used for determining whether or not the override condition is satisfied, the avoidance steering operation performed by the driver can be detected promptly, and the execution of the pre-collision control can be immediately prohibited as soon as the driver performs the avoidance steering operation.

Furthermore, the steering angle θ is used for determining whether or not the continuation condition is satisfied. An instantaneous change amount of the steering angle θ is smaller than that of the steering angular velocity ω. Therefore, it is possible to reduce the probability that the continuation condition is erroneously satisfied even though the driver does not perform the avoidance steering operation.

The present invention is not limited to the above embodiment, and various modifications of the present invention may be adopted.

### <First Modification>

In the above embodiment, an example has been described in which the threshold angular velocity ωth which is compared with the absolute value of the steering angular velocity ω (|ω|) at step 425 shown in FIG. 4 (hereinafter referred to as "first threshold angular velocity"), and the threshold angular velocity ωth which is compared with the absolute value of the steering angular velocity ω (|ω|) at step 440 shown in FIG. 4(hereinafter referred to as "second threshold angular velocity") are the same. However, the second threshold angular velocity ωth may be set to a value smaller than the first threshold angular velocity ωth. Note that the first threshold angular velocity ωth may be referred to as a "first threshold value," and the second threshold angular velocity ωth may be referred to as a "second threshold value."

### <Second Modification>

In the above embodiment, the steering direction at the time when the override condition is satisfied is stored as the avoidance direction (see step 430 shown in FIG. 4). However, the avoidance direction is not limited to this. For example, the ECU 20 may store, as the avoidance direction, a direction in which an avoidance space that allows the vehicle VA to travel without colliding with the object (hereinafter referred to as the "target object") having the TTC equal to or less than a threshold time Tth, and any object other than the target object, exists. Note that the ECU 20 determines whether or not the avoidance space exists based on the image data and the radar data.

### <Third Modification>

In the above embodiment, the ECU 20 suspends the pre-collision control when the override condition is satisfied. However, the ECU 20 may terminate the pre-collision control when the override condition is satisfied. Furthermore, in the above embodiment, it is determined whether or not the override condition is satisfied while the pre-collision control is being executed. However, it may alternatively be determined whether or not the pre-collision control is being executed. In this case, if the override condition is satisfied when the TTC is equal to or less than the threshold time Tth, the pre-collision control may not be executed.

### <Fourth Modification>

In the above embodiment, if the override condition is no longer satisfied (step 440: "Yes"), the ECU 20 regards the override condition as no longer satisfied when the state in which the continuation condition is not satisfied continues for the predetermined time, even if the continuation condition has never been satisfied. For example, if the continuation condition is not satisfied at the time the override condition becomes no longer satisfied, the ECU 20 may regard the override condition as no longer satisfied immediately. Furthermore, if the continuation condition is satisfied at the time the override condition becomes no longer satisfied, the ECU 20 may regard the override condition as no longer satisfied when the state in which the continuation condition is not satisfied continues for the predetermined time.

### <Fifth Modification>

An operation amount (hereinafter referred to as an "override determination value") used to determine whether or not the override condition is satisfied is not limited to the steering angular velocity ω. The operation amount may be any value related to the steering operation of the steering wheel SW, such as a steering angular acceleration or the steering angle θ. The steering angular acceleration is a time differential value of the steering angular velocity ω.

Furthermore, it is preferable that the override determination value be a time differential value of an operation amount (hereinafter referred to as the "continuation determination value") used to determine whether or not the continuation condition is satisfied, the differential being of first order or higher. This is because the override condition is a condition for determining whether or not the driver has an instantaneous steering intention. For example, when the steering angle θ is adopted as the continuation determination value, it is preferable that the steering angular velocity ω or the steering angular acceleration be adopted as the override determination value. When the steering angular velocity ω is adopted as the continuation determination value, it is preferable that the steering angular acceleration be adopted as the override determination value. Note that the same operation amount may be used as both the override determination value and the continuation determination value.

### <Sixth Modification>

The apparatus 10 does not necessarily include both the camera 22 and the millimeter-wave radar 24, and may include at least one remote sensing sensor capable of detecting an object.

The present apparatus 10 can be applied to (or installed in/on) an engine vehicle, a hybrid electric vehicle (HEV), a plug-in hybrid electric vehicle (PHEV), a fuel cell electric vehicle (FCEV), and a battery electric vehicle (BEV). Furthermore, the present apparatus 10 can also be applied to an autonomous vehicle. The present invention can be understood as a non-transitory computer-readable storage medium in which a program for realizing the functions of the present apparatus 10 is stored.

## Claims

1. A vehicle control apparatus (10) for performing pre-collision control for reducing a collision probability that a vehicle collides with an object (step 325) when the collision probability is high (step 320: "Yes"),
wherein the vehicle control apparatus is configured to:
prohibit performing the pre-collision control (step 435, step 330: "No") when an operation amount related to a steering operation of a steering wheel (SW) of the vehicle by a driver becomes greater than a first threshold value during the pre-collision control (step 425: "Yes"); and
continue to prohibit performing the pre-collision control (step 330: "No") when the steering operation satisfies a predetermined continuation condition (step 455: "Yes", step 460: "Yes"), in a case where the operation amount is equal to or less than a second threshold value after prohibiting performing the pre-collision control (step 440: "Yes").

2. The vehicle control apparatus according to claim 1,
wherein the vehicle control apparatus is configured to acquire, as the operation amount, a steering angular velocity that represents a change amount per unit time of a steering angle of the steering wheel (step 410, step 425, step 440).

3. The vehicle control apparatus according to claim 1 or 2,
wherein the vehicle control apparatus is configured to:
periodically acquire a steering angle of the steering wheel (step 405); and
determine that the steering operation satisfies the continuation condition when at least one of a first condition and a second condition is satisfied,
the first condition being satisfied when an absolute value of the steering angle is greater than a threshold angle (step 455: "Yes"), and
the second condition being satisfied when an absolute value of a current steering angle acquired in a current cycle is greater than or equal to an absolute value of a previous steering angle acquired in a previous cycle (step 460: "Yes").

4. The vehicle control apparatus according to claim 3,
wherein the vehicle control apparatus is configured to determine whether or not at least one of the first condition and the second condition is satisfied, when a direction of the steering operation is the same as a steering direction of the steering wheel (step 450: "Yes") at a time when the operation amount becomes greater than the first threshold value.

5. The vehicle control apparatus according to any one of claims 3 and 4,
wherein the vehicle control apparatus is configured to permit performing the pre-collision control (step 475) when a state in which the steering operation does not satisfy the continuation condition continues for a predetermined time or more (step 470: "Yes") in a case where the operation amount becomes equal to or less than the second threshold value (step 440: "Yes") after prohibiting performing the pre-collision control.

6. The vehicle control apparatus according to any one of the preceding claims,
wherein the second threshold value is set to be equal to or less than the first threshold value.

7. The vehicle control apparatus according to any one of claims 1 and 3-6,
wherein the vehicle control apparatus is configured to:
determine that the steering operation satisfies the continuation condition when a continuation determination value, which varies depending on the steering operation and is different from the operation amount, satisfies a predetermined condition (step 455: "Yes", step 460: "Yes"); and
adopt a time differential value of first order or higher of the continuation determination value as the operation amount.

8. A vehicle control method for causing a computer (20) mounted on a vehicle to perform pre-collision control for reducing a collision probability that the vehicle collides with an object (step 325) when the collision probability is high (step 320: "Yes"),
wherein the vehicle control method comprises:
a step of prohibiting performing the pre-collision control (step 435, step 330: "No") when an operation amount related to a steering operation of a steering wheel (SW) of the vehicle by a driver becomes greater than a first threshold value during the pre-collision control (step 425: "Yes"); and
a step of continuing to prohibit performing the pre-collision control (step 330: "No") when the steering operation satisfies a predetermined continuation condition (step 455: "Yes", step 460: "Yes"), in a case where the operation amount is equal to or less than a second threshold value (step 440: "Yes") after prohibiting performing the pre-collision control.

9. A program for causing a computer (20) mounted on a vehicle to perform pre-collision control for reducing a collision probability that the vehicle collides with an object (step 325) when the collision probability is high (step 320: "Yes"),
wherein the program causes the computer to:
prohibit performing the pre-collision control (step 435, step 330: "No") when an operation amount related to a steering operation of a steering wheel (SW) of the vehicle by a driver becomes greater than a first threshold value during the pre-collision control (step 425: "Yes"); and
continue to prohibit performing the pre-collision control (step 330: "No") when the steering operation satisfies a predetermined continuation condition (step 455: "Yes", step 460: "Yes"), in a case where the operation amount is equal to or less than a second threshold value (step 440: "Yes") after prohibiting performing the pre-collision control.
